# EUROPEAN PATENT APPLICATION

(11) **EP 4 620 556 A1**
(43) Date of publication of application: **24.09.2025**
(21) Application number: 24164294.1
(22) Date of filing: 18.03.2024
(51) Int. Cl.: B01D 53/02, B01D 53/04

(54) **SORBENT MODULE FOR CONTAINING A SORBENT MATERIAL AND ADSORBER STRUCTURE COMPRISING SAME**

(71) Applicant: Dacma GmbH, 22559 Hamburg (DE)
(72) Inventor: Backs, Alexander, 21149 Hamburg (DE); Spitzner, Jörg, 22559 Hamburg (DE)
(74) Representative: Uexküll & Stolberg

(57) **Abstract**

A sorbent module (9) for containing a sorbent material, the sorbent module (9) comprises a front side (10), a rear side (11) and four connecting sides (12) each connecting the front side (10) and the rear side (11). The front side (10) and the rear side (11) are oriented parallel to one another and are arranged at a distance (D) from one another, such that the front side (10) and the rear side (11) together with the four connecting sides (12) enclose a volume for receiving the sorbent material. The front side (10) and the rear side (11) are formed by a grid structure (19) which is permeable for a gas mixture streaming through the sorbent module (9) from the front side (10) towards the rear side (11). The four connecting sides (12) are connected to one another and form a self-supporting frame structure of the sorbent module (9).

The sorbent module (9) comprises a release mechanism (24) which is configured to release one of the connecting sides (12) from the remaining connecting sides (12), the front side (10) and the rear side (11) upon manual actuation such that the one of the connecting sides (12) is individually detachable to release an opening of the sorbent module (9) for filling the sorbent material into the volume enclosed by the front side (10), the rear side (11) and the four connecting sides (12).

## Description

### FIELD OF THE INVENTION

The invention relates to a sorbent module for containing a sorbent material, to an adsorber structure for capturing gaseous components from a gas mixture and to the use of the adsorber structure to capture gaseous components from atmospheric air.

### BACKGROUND OF THE INVENTION

Gaseous components such as carbon dioxide, methane or sulfur dioxide make a substantial contribution to air pollution.

In particular the rising CO₂ concentration in the atmosphere increased the demand for research into CO₂ mitigation technologies. Carbon capture utilization and sequestration strategies have so far focused on capturing CO₂ from point sources such as coal-fired power plants, or natural gas (NG) production wells. However, stationary sources account for only one-third of global emissions. In addition, transportation costs arise when transporting the generated CO₂ from the point sources to plants in order to further process the generated CO₂.

Another strategy to capture CO₂ is directly from the air, often termed direct air capture (DAC). Carbon dioxide capture is achieved when atmospheric air makes contact with chemical media, typically an aqueous alkaline solvent or sorbents and is bound thereto. The chemical media is subsequently stripped of CO₂ through the application of energy (namely heat), resulting in CO₂ that can undergo dehydration and compression, while for example regenerating the chemical media for reuse at the same time.

Typically two main DAC systems are used for the capture of CO₂, namely a high temperature (HT) aqueous solution and a low temperature (LT) solid sorbent. The present invention focuses on the low temperature (LT) solid sorbent which is explained in the following.

Typically, technologies regarding the low temperature (LT) solid sorbent use a reactor comprising the sorbent, where adsorption and desorption (regeneration) happen one after another in cycles. In a first step the reactor is open. Atmospheric air flows through the reactor naturally or with the aid of fans. At ambient temperature, CO₂ chemically binds to the sorbent and CO₂ depleted air leaves the system. This step is completed when the sorbent is fully saturated with CO₂. In a next step, the fans are switched off, the inlet opening of the reactor is closed and the remaining air is optionally swept out through a pressure drop by vacuuming or inserting steam into the reactor. Then, regeneration happens by heating the reactor to a certain release temperature, depending on the sorbent. Released CO₂ is collected and transported out of the reactor for purification, compression, utilization, storage or sequestration. For starting another cycle, the reactor is then again cooled to below 60°C, such as to ambient temperature conditions. The sorbent determines the specific conditions of the cycles. Several different sorbents were proposed in literature, such as amines, amino-polymers, silica (TRI-PE-MCM-41), potassium carbonate (K₂CO₃) and K₂CO₃/Y₂O₃.

DAC is a relatively new and innovative technology in early commercial stages, which in a long term perspective, along with conventional technologies, can help humankind to control and mitigate climate change.

For example, co-pending patent application EP 22210574.4 relates to an adsorber structure for capturing gaseous components from a gas mixture. The adsorber structure is inserted into a reactor and comprises multiple frames which each support one or more sorbent modules filled with a sorbent material. Each of the sorbent modules are detachable from the one or more frames upon manual actuation of a release mechanism. The mounting of each of the sorbent modules in the corresponding frame is complex. The sealing between the frames and the inner wall of the reactor is difficult due to manufacturing tolerances.

It is therefore an object of the present invention to provide a sorbent module which is adapted to be filled with a sorbent material and an adsorber structure for capturing gaseous components from a gas which allow an easy installing of the sorbent modules in the adsorber structure and a proper sealing between the adsorber structure and the reactor.

### SUMMARY OF THE INVENTION

The object is achieved with a sorbent module as defined in present claim 1 and an adsorber structure as defined in claim 10. Preferred embodiments are set out in the appending sub-claims.

According to the invention, there is provided a sorbent module for containing a sorbent material, the sorbent module comprising a front side, a rear side and four connecting sides each connecting the front side and the rear side. The front side and the rear side are oriented parallel to one another and are arranged at a distance from one another, such that the front side and the rear side together with the four connecting sides enclose a volume for receiving the sorbent material. The front side and the rear side are formed by a grid structure which is permeable for a gas mixture streaming through the sorbent module from the front side towards the rear side. The four connecting sides are connected to one another and form a self-supporting frame structure of the sorbent module. The sorbent module comprises a release mechanism which is configured to release one of the connecting sides from the remaining connecting sides, the front side and the rear side upon manual actuation such that the one of the connecting sides is individually detachable to release an opening of the sorbent module for filling the sorbent material into the volume for receiving the sorbent material. The sorbent module is easy to manufacture. The sorbent module may be emptied through the opening and may be refilled. Preferably, a funnel is partially inserted into the opening and the sorbent material is filled through the funnel into the volume of the sorbent module for receiving the sorbent material. Thus, the sorbent module can be reused.

In an embodiment of the invention the release mechanism comprises two first fastening elements configured to release the one of the connecting sides from the connecting sides located adjacent to the opening. The first fastenings elements preferably comprise two screws which might be tightened or untightened to fix or release the one of the connecting sides from the remaining connecting sides.

In another embodiment of the invention each of the connecting sides is formed by a strut which extends along a longitudinal direction and comprises a U-shaped cross-section in a plane transverse to the longitudinal direction. The U-shaped cross-section provides stability to each of the struts such that upon connection of the four connecting sides the connecting sides form the self-supporting frame structure.

Preferably the sorbent module comprises multiple spacers which are arranged in the volume enclosed by the front side, the rear side and the four connecting sides. The spacers in the volume ensure a uniform distance between the front side and the rear side and prevent bulging due to the sorbent material inside the volume. Preferably, the spacers are formed as sleeves.

In an embodiment of the invention the sorbent module comprises multiple second fastening elements which protrude through the front side or the rear side and each engage with one of the spacers for fastening the one of the spacers in the volume enclosed by the front side, the rear side and the four connecting sides. The second fastening element prevent the spacer to get out of place and at the same time prevent a lifting of the frontside or the rear side from the spacers. The second fastening elements may optionally be formed as screws or rivets.

In another embodiment of the invention the front side and the rear side of the sorbent module are arranged at a distance in the range of about 0.5 cm to about 2.5 cm, preferably of about 1 cm to about 2 cm, more preferably of about 1 cm to about 1.5 cm, most preferably of about 1 cm, measured transversely to a plane in which the front side is located. This range of distances between the front side and the rear side allows the sorbent modules to be manufactured and filled industrially. Moreover, this range allows a proper handling of the sorbent modules in terms of weight.

Preferably, the four connecting sides comprise two first connecting sides and two second connecting sides, wherein the two first connecting sides are arranged parallel to one another and have a first length, wherein the two second connecting sides are arranged parallel to one another and have a second length, wherein the first connecting sides are arranged transverse to the second connecting sides, wherein the first length is shorter than the second length and wherein the sorbent module has a cuboid shape. The first connecting sides and the second connecting sides thus form a rectangular frame.

The cuboid shape of the sorbent modules is advantageous as this form allows the installation of multiple sorbent modules in an adsorber structure around a cylindrical center portion, e.g. in a zigzag arrangement when viewed in a radial direction towards the cylindrical center portion, and thus provides an increased filter surface. Preferably, the opening of the sorbent module for filling the sorbent material into the volume enclosed by the front side, the rear side and the four connecting sides is located at one of the first connecting sides.

In an embodiment of the invention the self-supporting frame structure of the sorbent module is twistable around a twisting axis which extends from one of the first connecting sides to the other of the first connecting sides, parallel to the second connecting sides. The twisting of the sorbent module results in an improved stability of the geometry, in particular, when the sorbent module is mounted to the cylindrical center portion and to the star shaped holders and is part of the sorbent structure.

In another embodiment of the invention the grid structure is made from a mesh with a front face and a rear face, the mesh having a length and a width, wherein the grid structure comprises reinforcement struts for reinforcing the mesh, wherein the reinforcement struts extend along the front face and the rear face over the length and the width of the mesh. Preferably, the mesh is made from stainless steel. The reinforcing elements prevent bulging of the mesh due to the sorbent material inside the volume enclosed by the front side, the rear side and the four connecting sides.

The above object is also achieved by an adsorber structure as defined by claim 10. Preferred embodiments are set out in the appending sub-claims.

According to the invention, there is provided an adsorber structure for capturing gaseous components from a gas mixture. The adsorber structure comprises a cylindrical center portion extending along a longitudinal axis from a first end to a second end, a first star shaped holder arranged at the first end, and a second star shaped holder arranged at the second end of the center portion. Each of the star shaped holders comprises the same number of multiple arms which extend at a constant angular distance from the center portion in different radial outward directions. The star shaped holders are rotated relative to one another such that each arm of the first star shaped holder is positioned between two adjacent arms of the second star shaped holder when looking along the longitudinal axis from the first end toward the second end of the center portion. The wording when looking along the longitudinal axis from the first end toward the second end of the center portion is to be understood as in a direction along the longitudinal axis from the first end toward the second end of the center portion.

The adsorber structure further comprises a plurality of sorbent modules as defined above. Each sorbent module contains the sorbent material and is adapted to adsorb the gaseous components from the gas mixture. Each sorbent module comprises four connecting sides which comprise two first connecting sides and two second connecting sides. The two first connecting sides are arranged parallel to one another and have a first length. The two second connecting sides are arranged parallel to one another and have a second length. The first connecting sides are arranged transverse to the second connecting sides. The first length is shorter than the second length. Each of the sorbent modules has a cuboid shape. Two sorbent modules extend from each arm of the first star shaped holder to the respective two adjacent arms of the second star shaped holder along the longitudinal axis of the center portion. The arms of the first star shaped holder and the arms of the second star shaped holder each comprise two U-shaped receptacles into which the sorbent modules are slidable in a radial direction towards the cylindrical center portion such that one of the U-shaped receptacles of the arms of the first star shaped holder encloses one of the first connecting sides of one of the sorbent modules and one of the U-shaped receptacles of the respective arm of the second star shaped holder encloses the other first connecting side of the one of the sorbent modules. The adsorber structure further comprises fixing elements which are attachable to each of the arms of the first star shaped holder and the second star shaped holder at their radial outermost ends. The fixing elements when being attached to the arms of the first and second star shaped holders are configured to cover the one of the U-shaped receptacles of the arms of the first star shaped holder as well as the one of the U-shaped receptacles of the arms of the second star shaped holder and to abut one of the second connecting sides of the one of the sorbent modules such that the one of the sorbent modules is fixed in the corresponding U-shaped receptacles at the arms of the first star shaped holder and the second star shaped holder.

As the sorbent moules are configured to slide into the U-shaped receptacles at the arms of the first and second star shaped holder installing of the sorbent modules in the adsorber structure is facilitated. Optionally, the cylindrical center portion comprises a U-shaped receptacle into which the radial innermost second connecting sides of the sorbent modules are inserted when sliding the sorbent modules in the radial direction towards the cylindrical center portion. Alternatively, a U-shaped receptacle at the cylindrical center portion is omitted and the innermost second connecting side of each of the sorbent modules abuts the circumferential surface of the cylindrical center portion.

The adsorber structure according to the present invention is in particular suitable to be used in a cyclic adsorption/desorption process using a loose particulate sorbent material for an adsorption of a gaseous component such as carbon dioxide, methane or sulfur dioxide from a gas mixture, preferably from atmospheric air.

In an embodiment of the invention the fixing elements are formed as plates, which cover the radial outermost ends of the arms of the first and second star shaped holders. Each of the arms comprises a radial outermost end. The plates may be easily fixed to the radial outermost ends. Optionally, the arms of the first star shaped holder are oriented in such a way that the cross-sectional areas of the first struts widen when looking along the longitudinal axis from the first end toward the second end of the center portion. Optionally, the arms of the second star shaped holder are oriented in such a way that the cross-sectional areas of the arms taper when looking along the longitudinal axis from the first end toward the second end of the center portion. Preferably, the U-shaped receptacles are arranged at the widest cross-sectional area of the arms. The plates may be rotated around an axis of rotation where they are fixed to the radial outermost ends of the arms from a closed position to an open position. In the closed position the plates abut the radial outermost second connecting side of the one of the sorbent modules such that the sorbent module cannot be removed from the U-shaped receptacles in a radial outward direction. In the open position the plates do not cover the U-shaped receptacles and do not abut the radial outermost second connecting side of the one of the sorbent modules such that the sorbent module can be removed from the U-shaped receptacles in a radial outward direction.

In another embodiment of the invention the adsorber structure is configured to be inserted into a housing of a reactor for separating gaseous components from a gas mixture. The gaseous components to be separated are e.g. carbon dioxide, methane or sulfur dioxide. Preferably, the housing has a cylindrical shape and the adsorber structure is inserted along the longitudinal axis of the cylindrical center portion into the housing of the reactor. Optionally, the adsorber structure is configured to support the housing of the reactor. In other words: Optionally, the adsorber structure is part of the load bearing structure of the housing such that the adsorber structure supports the housing and takes loads acting on the housing. Thus, the wall thicknesses of the housing and thus the weight of the housing can be reduced. Reducing the weight of the housing also reduces the heat capacity of the housing and thus the energy needed to heat up the reactor to a temperature for regenerating the sorbent modules during a desorption mode of the reactor.

Preferably, the adsorber structure further comprises sealing elements arranged on each of the radial outermost second connecting sides of the sorbent modules. The sealing elements provide a proper sealing between the sorbent structure and an inner wall of the reactor. The sealing is adapted to compensate for manufacturing tolerances regarding the reactor housing and the sorbent modules.

In an embodiment of the invention each sealing element is formed by a bended steel panel which extends over the second length of the radial outermost second connecting sides of the sorbent modules, wherein the bended steel panel forms a sealing lip which together with the front side of the corresponding sorbent module to which it is attached encloses an angle in a range of 90° to 180° in a plane which extends radially outward from the cylindrical center portion. In other words: The plane in which the angle of 90° to 180° lies extends traverse to the longitudinal axis of the cylindrical center portion. The bended steel panel is preferably made from spring steel. The bended steel panel provides an automatic and adaptable seal to the inner wall of the reactor. Preferably, the steel panel is welded to the radial outermost second connecting side of each the sorbent modules. Also preferably, the steel panel is located on the front side of each the sorbent modules and thus on the side of the sorbent module which is first hit by the gas mixture streaming through the sorbent module from the front side towards the rear side.

The above object is also achieved by a use of the adsorber structure as defined above to capture gaseous components from atmospheric air. These gaseous components are e.g. carbon dioxide, methane or sulfur dioxide from atmospheric air. Preferably, the adsorber structure is inserted in a housing of a reactor which is positioned in a 20ft or 40ft ISO standardized and derivative intermodal shipping containers transverse to the longitudinal direction of the container. This allows an easy and fast worldwide transport and installation of the reactor. Optionally, multiple reactors, such as two, three, four, five or six reactors, are arranged in one container. The reactors may be arranged on different levels in the container, such as e.g. on a lower level and on an upper level. Preferably, peripheral components for operating the one or more reactors, such as an evaporator and/or a vacuum pump, may be arranged in a separate 20ft or 40ft ISO standardized and derivative intermodal shipping container. The container containing the peripheral components may be arranged on top or below of the container comprising the one or more reactors.

### BRIEF DESCRIPTION OF THE FIGURES

The invention will now be described in connection with an exemplary embodiment shown in the Figures in which:
- Figure 1: shows a perspective view of an adsorber structure according to the present invention,
- Figure 2a: shows a schematic view of a sorbent module,
- Figure 2b: shows a schematic view of a sorbent module with a funnel and
- Figure 3: shows detail A of Figure 1.

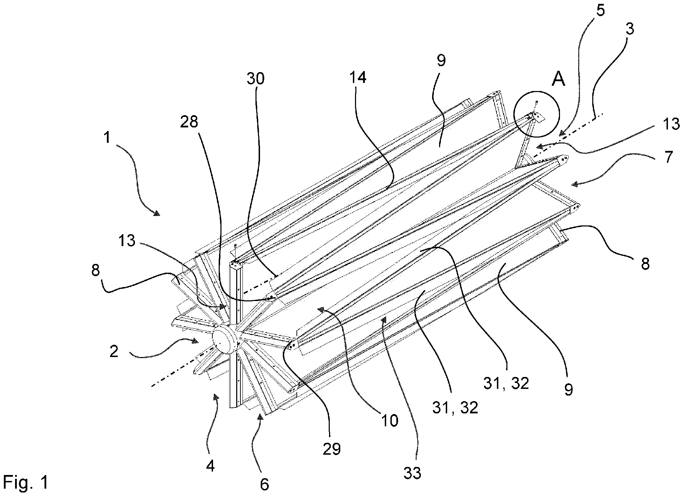

Figure 1 shows an adsorber structure 1 which is used to capture gaseous components such as carbon dioxide, methane or sulfur dioxide from a gas mixture, e.g. atmospheric air in a cyclic adsorption/desorption process using a loose particulate sorbent material. The adsorber structure 1 is configured to be inserted into a housing of a reactor (not shown). Optionally, the adsorber structure 1 is configured to support the housing of the reactor.

A reactor and the housing thereof in which the adsorber structure 1 according to the present invention is configured to be inserted are for example disclosed in parallel European Patent Application No. 22210535.5 to which reference is made in its entirety.

The adsorber structure 1 comprises a cylindrical center portion 2 extending along a longitudinal axis 3 from a first end 4 to a second end 5. The adsorber structure 1 further comprises a first star shaped holder 6 arranged at the first end 4, and a second star shaped holder 7 arranged at the second end 5 of the center portion 2. Each of the star shaped holders 6, 7 comprises the same number of multiple arms 8 which extend at a constant angular distance from the center portion 2 in different radial outward directions. The star shaped holders 6, 7 are rotated relative to one another such that each arm 8 of the first star shaped holder 6 is positioned between two adjacent arms 8 of the second star shaped holder 7 when looking along the longitudinal axis 3 from the first end 4 toward the second end 5 of the center portion 2.

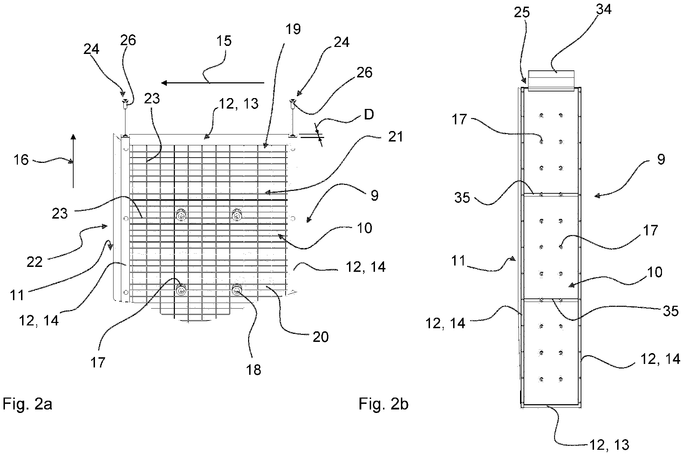

The adsorber structure 1 further comprises a plurality of sorbent modules 9, which are shown in detail in Fig. 2a and Fig. 2b. Each sorbent module 9 contains the sorbent material (not shown) and is adapted to adsorb the gaseous components from the gas mixture. Each sorbent module 9 comprises a front side 10, a rear side 11 and four connecting sides 12, each connecting the front side 10 and the rear side 11. Each of the connecting sides 12 is formed by a strut which extends along a longitudinal direction and comprises a U-shaped cross-section in a plane transverse to the longitudinal direction. The four connecting sides 12 are connected to one another and form a self-supporting frame structure of the sorbent module 9.

The four connecting sides 12 comprise two first connecting sides 13 and two second connecting sides 14. The two first connecting sides 13 are arrange parallel to one another and have a first length along a first direction 15. The two second connecting sides 14 are arrange parallel to one another and have a second length along a second direction 16. The first direction 15 is arranged transverse to the second direction 16 and the first length is shorter than the second length. The sorbent module 9 has a cuboid shape.

The front side 10 and the rear side 11 are oriented parallel to one another and are arranged at a distance D from one another, such that the front side 10 and the rear side 11 together with the four connecting sides 12 enclose a volume (not shown) for receiving the sorbent material. The front side 10 and the rear side 11 of the sorbent module 9 are arranged at a distance D in the range of about 0.5 cm to about 2.5 cm, preferably of about 1 cm to about 2 cm, more preferably of about 1 cm to about 1.5 cm, most preferably of about 1 cm, measured transversely to a plane in which the front side 10 is located.

Each sorbent module 9 may optionally comprise additional cross struts 35 which connect two opposing second connecting sides 14 in order to reinforce the self-supporting frame structure of the sorbent module 9. The cross struts 35 are arranged parallel to the first connecting sites 13 and are arranged outside of the volume enclosed by the front side 10, the rear side 11 and the four connecting sides 12.

The sorbent module 9 comprises multiple spacers 17 which are arranged in the volume enclosed by the front side 10, the rear side 11 and the four connecting sides 12 and support the front side 10 and the rear side 11 to provide the distance D between the front side 10 and the rear side 11. The sorbent module comprises multiple second fastening elements 18 which protrude through the front side 10 or the rear side 11 and each engage with one of the spacers 17 for fastening the one of the spacers 17 in the volume enclosed by the front side, the rear side and the four connecting sides.

The front side 10 and the rear side 11 are formed by a grid structure 19 which is permeable for a gas mixture streaming through the sorbent module 9 from the front side 10 towards the rear side 11. The grid structure 19 is made from a mesh 20 with a front face 21 and a rear face 22, the mesh 20 having a length and a width. The grid structure 19 comprises reinforcement struts 23 for reinforcing the mesh 20. The reinforcement struts 23 extend along the front face 21 and the rear face 22 over the length and the width of the mesh 20.

The sorbent module 9 comprises a release mechanism 24 which is configured to release one of the connecting sides 12 from the remaining connecting sides 12, the front side 10 and the rear side 11 upon manual actuation such that the one of the connecting sides 12 is individually detachable to release an opening 25 of the sorbent module for filling the sorbent material into the volume enclosed by the front side, the rear side and the four connecting sides. The release mechanism 24 comprises two first fastening elements 26 formed as screws which are configured to release the one of the connecting sides 12 from the connecting sides 12 located adjacent to the opening 25. As shown in Fig. 2b a funnel 34 may be partially inserted into the opening 25 to fill in the sorbent material into the volume of the sorbent module 9 for receiving the sorbent material.

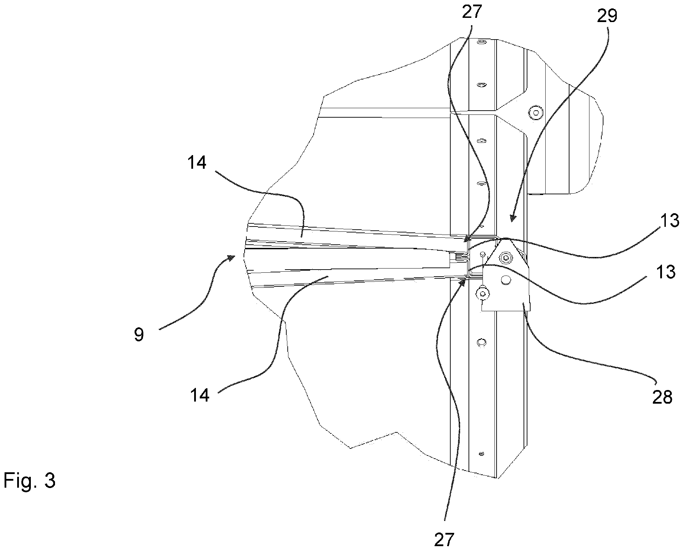

Returning now to Fig. 1. two sorbent modules 9 extend from each arm 8 of the first star shaped holder 6 to the respective two adjacent arms 8 of the second star shaped holder 7 along the longitudinal axis 3 of the center portion 2. The arms 8 of the first star shaped holder 6 and the arms 8 of the second star shaped holder 7 each comprise two U-shaped receptacles 27 (see Fig. 3) into which the sorbent modules 9 are slidable in a radial direction towards the cylindrical center portion 2 such that one of the U-shaped receptacles 27 of the arms 8 of the first star shaped holder 6 encloses one of the first connecting sides 13 of one of the sorbent modules 9 and one of the U-shaped receptacles 27 of the respective arm 8 of the second star shaped holder 7 encloses the other first connecting side 13 of the one of the sorbent modules 9. The receptacles 27 are shown in detail in Fig. 3 which depicts detail A of Fig. 1.

As further shown in Fig. 3 the adsorber structure 1 comprises fixing elements 28 which are attachable to each of the arms 8 of the first star shaped holder 6 and the second star shaped holder 7 at their radial outermost ends 29. The fixing elements 28 when being attached to the arms 8 of the first and second star shaped holders 6, 7 are configured to cover the one of the U-shaped receptacles 27 of the arms 8 of the first star shaped holder 6 as well as the one of the U-shaped receptacles 27 of the arms 8 of the second star shaped holder 7 and to abut one of the second connecting sides 14 of the one of the sorbent modules 9 such that the one of the sorbent modules 9 is fixed in the corresponding U-shaped receptacles 27 at the arms 8 of the first star shaped holder 6 and the second star shaped holder 7. The fixing elements 27 are formed as plates, which cover the radial outermost ends 29 of the arms 8 of the first and second star shaped holders 6, 7. The fixing elements 27 are fixed to the radial outermost ends 29 of the arms 8 by screws.

As shown in Fig. 1 the self-supporting frame structure of the sorbent module 9 when being installed in the adsorber structure is twisted around a twisting axis 30 which extends from one of the first connecting sides 13 to the other of the first connecting sides 13, parallel to the second connecting sides 14.

Sealing elements 31 are arranged on each of the radial outermost second connecting sides 14 of the sorbent modules 9. Each sealing element 31 is formed by a bended steel panel 32 which extends over the second length of the radial outermost second connecting sides 14 of the sorbent modules 9. The bended steel panel 32 forms a sealing lip 33 which together with the front side 10 of the corresponding sorbent module 9 to which it is attached encloses an angle in a range of 90° to 180° in a plane which extends radially outward from the cylindrical center portion.

### Reference Numerals

- 1: Adsorber structure
- 2: Center portion
- 3: Longitudinal axis
- 4: First end (center portion)
- 5: Second end (center portion)
- 6: First star shaped holder
- 7: Second star shaped holder
- 8: Arms (first/second star shaped holder)
- 9: Sorbent module
- 10: Front side (sorbent module)
- 11: Rear side (sorbent module)
- 12: Connecting sides (sorbent module)
- D: Distance (front and rear side)
- 13: First connecting sides (sorbent module)
- 14: Second connecting sides (sorbent module)
- 15: First direction (first connecting sides)
- 16: Second direction (second connecting sides)
- 17: spacers
- 18: second fastening elements (spacers)
- 19: Grid structure
- 20: Mesh
- 21: Front face (mesh)
- 22: Rear face (mesh)
- 23: Reinforcement struts (grid structure)
- 24: Release mechanism (sorbent module)
- 25: Opening (sorbent module)
- 26: First fastening elements (release mechanism)
- 27: U-Shaped receptacles (first/second star shaped holders)
- 28: Fixing elements
- 29: Radial outermost ends (first/second star shaped holders)
- 30: Twisting axis
- 31: Sealing elements (adsorber structure)
- 32: Steel panel
- 33: Sealing lip (steel panel)
- 34: Funnel
- 35: cross struts

## Claims

1. A sorbent module for containing a sorbent material, the sorbent module (9) comprising:
a front side (10),
a rear side (11) and
four connecting sides (12) each connecting the front side (10) and the rear side (11),
wherein the front side (10) and the rear side (11) are oriented parallel to one another and are arranged at a distance (D) from one another, such that the front side (10) and the rear side (11) together with the four connecting sides (12) enclose a volume for receiving the sorbent material,
wherein the front side (10) and the rear side (11) are formed by a grid structure (19) which is permeable for a gas mixture streaming through the sorbent module (9) from the front side (10) towards the rear side (11),
wherein the four connecting sides (12) are connected to one another and form a self-supporting frame structure of the sorbent module (9),
**characterized in**
**that** the sorbent module (9) comprises a release mechanism (24) which is configured to release one of the connecting sides (12) from the remaining connecting sides (12), the front side (10) and the rear side (11) upon manual actuation such that the one of the connecting sides (12) is individually detachable to release an opening (25) of the sorbent module (9) for filling the sorbent material into the volume enclosed by the front side (10), the rear side (11) and the four connecting sides (12).

2. The sorbent module of claim 1, wherein the release mechanism (24) comprises two first fastening elements (26) configured to release the one of the connecting sides (12) from the connecting sides (12) located adjacent to the opening (25).

3. The sorbent module of any of the preceding claims, wherein each of the connecting sides (12) is formed by a strut which extends along a longitudinal direction and comprises a U-shaped cross-section in a plane transverse to the longitudinal direction.

4. The sorbent module of any of the preceding claims, wherein the sorbent module comprises multiple spacers (17) which are arranged in the volume enclosed by the front side (10), the rear side (11) and the four connecting sides (12) and support the front side (10) and the rear side (11) to provide the distance (D) between the front side (10) and the rear side (11).

5. The sorbent module of claim 4, wherein the sorbent module (9) comprises multiple second fastening elements (18) which protrude through the front side (10) or the rear side (11) and each engage with one of the spacers (17) for fastening the one of the spacers (17) in the volume enclosed by the front side (10), the rear side (11) and the four connecting sides (12).

6. The sorbent module of any of the preceding claims, wherein the front side (10) and the rear side (11) of the sorbent module (9) are arranged at a distance (D) in the range of about 0.5 cm to about 2.5 cm, preferably of about 1 cm to about 2 cm, more preferably of about 1 cm to about 1.5 cm, most preferably of about 1 cm, measured transversely to a plane in which the front side (10) is located.

7. The sorbent module of any of the preceding claims, wherein the four connecting sides (12) comprise two first connecting sides (13) and two second connecting sides (14), wherein the two first connecting sides (13) are arranged parallel to one another and have a first length, wherein the two second connecting sides (14) are arranged parallel to one another and have a second length, wherein the first connecting sides (13) are arranged transverse to the second connecting sides (14), wherein the first length is shorter than the second length and wherein the sorbent module (9) has a cuboid shape.

8. The sorbent module of claim 7, wherein the self-supporting frame structure of the sorbent module is twistable around a twisting axis (30) which extends from one of the first connecting sides (13) to the other of the first connecting sides (13), parallel to the second connecting sides (14).

9. The sorbent module of any of the preceding claims, wherein the grid structure (19) is made from a mesh (20) with a front face (21) and a rear face (22), the mesh (20) having a length and a width, wherein the grid structure (19) comprises reinforcement struts (23) for reinforcing the mesh (20), wherein the reinforcement struts (23) extend along the front face (21) and the rear face (22) over the length and the width of the mesh (20).

10. An adsorber structure for capturing gaseous components from a gas mixture, the adsorber structure (1) comprising,
a cylindrical center portion (2) extending along a longitudinal axis (3) from a first end (4) to a second end (5),
a first star shaped holder (6) arranged at the first end (4), and
a second star shaped holder (7) arranged at the second end (5) of the center portion (2), wherein each of the star shaped holders (6, 7) comprises the same number of multiple arms (8) which extend at a constant angular distance from the center portion (2) in different radial outward directions,
wherein the star shaped holders (6, 7) are rotated relative to one another such that each arm (8) of the first star shaped holder (6) is positioned between two adjacent arms (8) of the second star shaped holder (7) when looking along the longitudinal axis (3) from the first end (4) toward the second end (5) of the center portion (2),
wherein the adsorber structure (1) further comprises a plurality of sorbent modules (9) according to any one of claims 1 to 9, each sorbent module (9) containing the sorbent material and being adapted to adsorb the gaseous components from the gas mixture,
wherein each sorbent module (9) comprises four connecting sides (12) which comprise two first connecting sides (13) and two second connecting sides (14), wherein the two first connecting sides (13) are arranged parallel to one another and have a first length, wherein the two second connecting sides (14) are arranged parallel to one another and have a second length, wherein the first connecting sides (13) are arranged transverse to the second connecting sides (14), wherein the first length is shorter than the second length and wherein the sorbent module (9) has a cuboid shape,
wherein two sorbent modules (9) extend from each arm (8) of the first star shaped holder (6) to the respective two adjacent arms (8) of the second star shaped holder (7) along the longitudinal axis (3) of the center portion (2),
wherein the arms (8) of the first star shaped holder (6) and the arms (8) of the second star shaped holder (7) each comprise two U-shaped receptacles (27) into which the sorbent modules (9) are slidable in a radial direction towards the cylindrical center portion (2) such that one of the U-shaped receptacles (27) of the arms (8) of the first star shaped holder (6) encloses one of the first connecting sides (13) of one of the sorbent modules (9) and one of the U-shaped receptacles (27) of the respective arm (8) of the second star shaped holder (7) encloses the other first connecting side (13) of the one of the sorbent modules (9), and
wherein the adsorber structure (1) further comprises fixing elements (28) which are attachable to each of the arms (8) of the first star shaped holder (6) and the second star shaped holder (7) at their radial outermost ends (29) and,
wherein the fixing elements (28) when being attached to the arms (8) of the first and second star shaped holders (6, 7) are configured to cover the one of the U-shaped receptacles (27) of the arms (8) of the first star shaped holder (6) as well as the one of the U-shaped receptacles (27) of the arms (8) of the second star shaped holder (7) and to abut one of the second connecting sides (14) of the one of the sorbent modules (9) such that the one of the sorbent modules (9) is fixed in the corresponding U-shaped receptacles (27) at the arms (8) of the first star shaped holder (6) and the second star shaped holder (7).

11. The adsorber structure of claim 10, wherein the fixing elements (28) are formed as plates, which cover the radial outermost ends (29) of the arms (8) of the first and second star shaped holders (6, 7).

12. The adsorber structure of claims 10 or 11, wherein the adsorber structure (1) is configured to be inserted into a housing of a reactor for separating gaseous components from a gas mixture.

13. The adsorber structure of any one of claims 10 to 12, wherein the adsorber structure further (1) comprises sealing elements (31) arranged on each of the radial outermost second connecting sides (13) of the sorbent modules (9).

14. The adsorber structure of claim 13, wherein each sealing element (31) is formed by a bended steel panel (32) which extends over the second length of the radial outermost second connecting sides (14) of the sorbent modules (9), wherein the bended steel panel (32) forms a sealing lip (33) which together with the front side (10) of the corresponding sorbent module (9) to which it is attached encloses an angle in a range of 90° to 180° in a plane which extends radially outward from the cylindrical center portion.

15. A use of the adsorber structure of claim 10 to 14 to capture gaseous components from atmospheric air.
